# EUROPÄISCHE PATENTSCHRIFT

(11) **EP 1 514 435 B1**
(45) Veröffentlichungstag und Bekanntmachung des Hinweises auf die Patenterteilung: **02.11.2006**
(21) Anmeldenummer: 03735612.8
(22) Anmeldetag: 12.06.2003
(51) Int. Cl.: H04Q 3/66, H04M 7/00, H04L 12/64

(54) **Ausfallsichere Anbindung eines Netzelementes an ein Kommunikationsnetz **
Fail-safe coupling of a network element to a communication network
Couplage sécurisé d'un élément de réseau à un réseau de télécommunication

(30) Priorität: 19.06.2002 EP 02013645
(43) Veröffentlichungstag der Anmeldung: 16.03.2005
(73) Patentinhaber: SIEMENS AKTIENGESELLSCHAFT, 80333 München (DE)
(72) Erfinder: JUGEL, Alfred, 82538 Geretsried (DE); STADEMANN, Rainer, 82335 Berg (DE)
(86) Internationale Anmeldenummer: PCT/EP2003/006202
(87) Internationale Veröffentlichungsnummer: WO 2004/002173

(56) Entgegenhaltungen:
- WO-A-02/21859
- US-A- 5 835 696
- US-A1- 2002 027 983

## Beschreibung

Um die mit herkömmlichen TDM-Telefonnetzen (TDM=Time Division Multiplex, zeitmultiplex) erreichte hohe Verfügbarkeit des Telefoniedienstes auch bei Einsatz von IP-Netzen (IP=Internet Protocol) als Transportnetz zu gewährleisten, müssen Media-Gateways (Trunk-Gateways, Access-Gateways) ausfallsicher an ein Netz von IP-Routern angeschlossen werden.

Die dabei zu berücksichtigenden Ausfälle umfassen Teilausfälle im Media-Gateway, Totalausfälle oder Teilausfälle von IP-Routern und Ausfälle der Verbindungen zwischen dem Media-Gateway und IP-Routern. Eine ausfallsichere Anbindung eines Media-Gateway an IP-Router gewährleistet eine unbeeinträchtige Funktion des Gesamtsystems, falls einer der genannten Ausfälle auftritt.

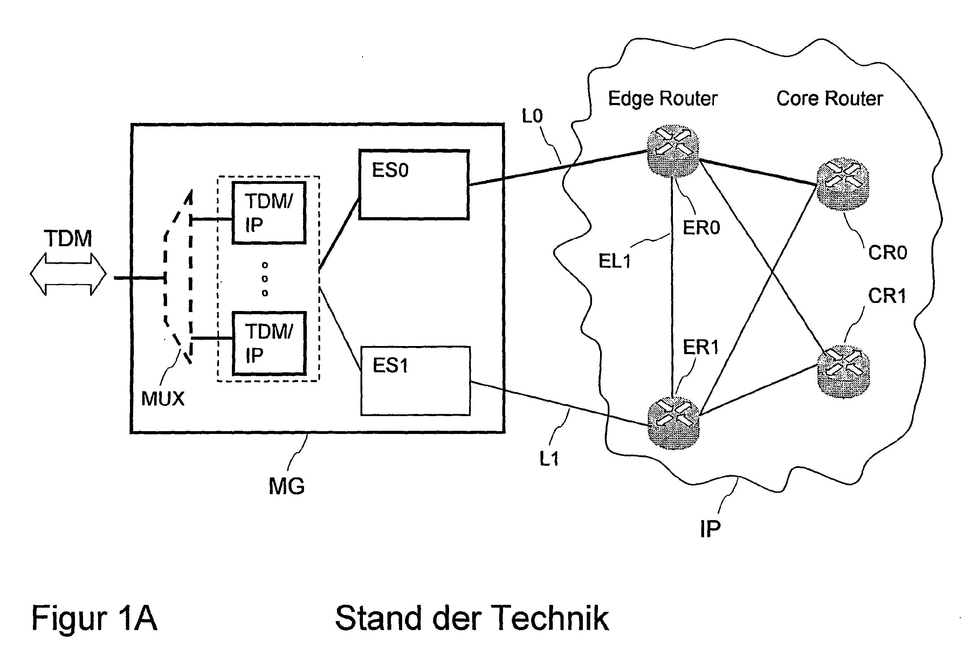

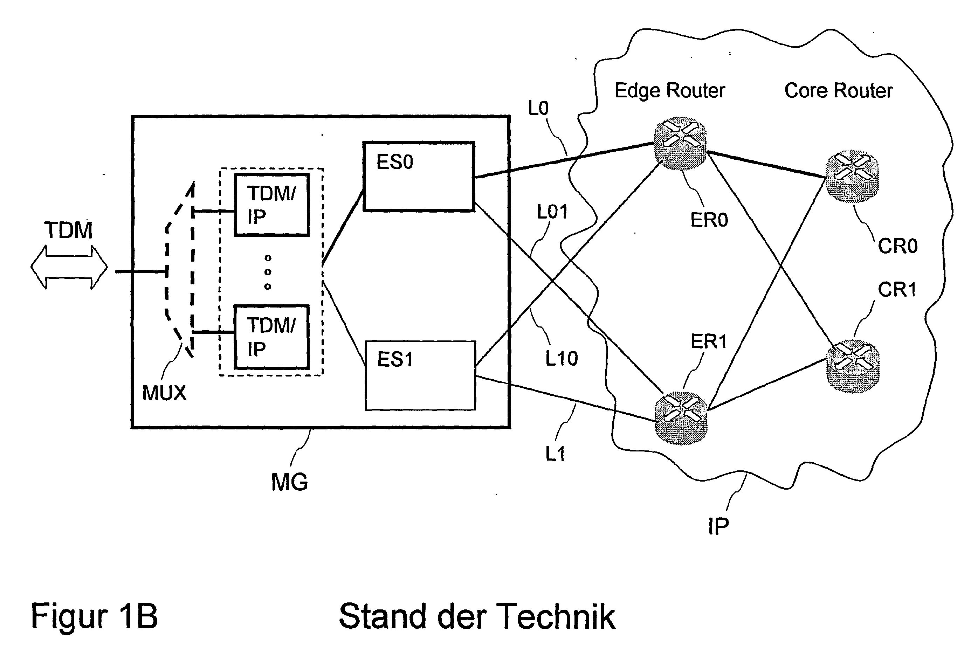

Bekannte Möglichkeiten zur Realisierung ausfallsicherer Verbindungen zwischen einem Media-Gateway und IP-Routern sind in den Figuren 1A und 1B dargestellt. Um Ausfälle von zentralen Komponenten innerhalb des Media-Gateway abzufangen, sind alle zentralen Komponenten des Media-Gateway MG doppelt vorhanden. In Figur 1 ist beispielsweise ein doppelt vorhandener Ethernet-Switch ES0, ES1 dargestellt, durch welchen das Switching bzw. die Vermittlung der Daten zwischen dem Media-Gateway MG und dem IP-Netz IP ausgeführt wird. Hierbei ist jeweils eine der doppelt vorhandenen Komponenten aktiv, die andere inaktiv. Im dargestellten Beispiel ist der erste Ethernet-Switch ES0 aktiv und der zweite Ethernet-Switch ES1 inaktiv. Der Betriebszustand einer inaktiven Komponente, hier beispielsweise des Ethernet-Switches ES1, wird auch als Standby bzw. Bereitschaft bezeichnet, da diese inaktive Komponente im Fall eines Ausfalls der aktiven Komponente sofort deren Aufgaben übernehmen kann. Die Menge der aktiven Komponenten wird im folgenden als "aktive Hälfte" bezeichnet, die Menge der inaktiven Komponenten als "inaktive Hälfte".

Der Media-Gateway MG wird an zwei Edge-Router ER0, ER1 des IP-Netzes IP angeschlossen. Hierzu weist der Media-Gateway MG mehrere unabhängige Anschlüsse auf - im dargestellten Beispiel aus Figur 1A sind dies zwei unabhängige Verbindungen L0, L1. Dabei wird sowohl die aktive als auch die inaktive Hälfte des Media-Gateway MG über separate Verbindungen L0, L1 mit dem IP-Netz IP verbunden. Die erste Verbindung L0 verbindet den ersten, aktiven Ethernet-Switch ES0 mit dem ersten Edge-Router ER0 des IP-Netzes IP. Die zweite Verbindung L1 verbindet den zweiten, inaktiven Ethernet-Switch ES1 mit dem zweiten Edge-Router ER1 des IP-Netzes IP. Die erste Verbindung L0 ist somit die aktive Verbindung, die zweite Verbindung L1 hingegen die inaktive Verbindung oder Standby-Verbindung. Die Begriffe "aktiv" und "inaktiv" beziehen sich dabei auf Transport und Vermittlung von Nutzdaten, wobei beispielsweise eine inaktive Verbindung physikalisch durchaus aktiv ist, allerdings keine Nutzdaten transportiert.

Bei einem beispielhaft angenommenen Media-Gateway MG mit 2000 (Sprachtelefonie-)Ports mit einer Datenrate von je 64 kbps und IP-Paketen, die jeweils 10 ms digitalisierter Sprache transportieren, werden Daten ungefähr mit einer Datenrate von 220Mbps zwischen dem Media-Gateway MG und dem IP-Netz IP, im Beispiel aus Figur 1 auf der aktiven Verbindung L0, übertragen.

In Figur 1A wird, wie bereits erläutert, jede Hälfte des Media-Gateway MG an jeweils einen Router ER0, ER1 mittels je einer Gigabit-Ethernet-Verbindung L0, L1 angeschlossen. Im Unterschied dazu wird in einer weiteren bekannten Konfiguration gemäß Figur 1B jede Hälfte des Media-Gateway MG jeweils mit beiden Routern ER0, ER1 mittels insgesamt vier Gigabit-Ethernet-Verbindungen L0, L1, L01, L10 verbunden. Dabei sind gegenüber Figur 1A folgende Verbindungen zusätzlich erforderlich: Verbindung L01 zwischen dem ersten Ethernet-Switch ES0 des Media-Gateway MG und dem zweiten Edge-Router ER1 des IP-Netzes IP; Verbindung L10 zwischen dem zweiten Ethernet-Switch ES1 und dem ersten Edge-Router ER0. In der in Figur 1B dargestellten Konfiguration zur Anbindung des Media-Gateway MG an das IP-Netz IP ist lediglich die erste Verbindung L0 aktiv, alle weiteren Verbindungen L1, L01, L10 sind inaktive Verbindungen bzw. Standby-Verbindungen.

Mit Blick auf die bekannte Möglichkeit der ausfallsicheren Anbindung gemäß Figur 1A ergeben sich folgende Probleme:
- Es wird nur ein Bruchteil - etwa 220Mbps - der insgesamt zur Verfügung stehenden Verbindungskapazität von 2-mal 1Gbps genutzt. Auch bei voller Auslastung der aktiven Verbindung L0 bei entsprechendem Ausbau des Media-Gateway MG kann die Auslastung der insgesamt zur Verfügung stehenden Übertragungskapazität nie größer als 50% sein.
- Die redundanten Teile des Media-Gateway MG bilden mit dem jeweiligen angeschlossenen Edge-Router ER0, ER1 eine sogenannte Ausfalleinheit. Als Folge reduziert sich die Verfügbarkeit, weil "Über-Kreuz-Ausfälle", d.h. gleichzeitiger Ausfall beispielsweise des ersten Ethernet-Switch ES0 und des zweiten Edge-Routers ER1, zu einem Totalausfall der Anbindung des Media-Gateway MG an die Edge-Router ER0, ER1 führen.
- Interne Ausfälle des Media-Gateway MG werden im IP-Netz IP sichtbar. Typischerweise sind der Betreiber des Media-Gateway MG und der Betreiber des IP-Netzes IP verschieden, und es ist für den Betreiber des Media-Gateway MG wünschenswert, nach außen keine Indizien zu liefern, die Rückschlüsse auf die Verfügbarkeit/Zuverlässigkeit seiner Systeme zulassen.
- Eine Ersatzschaltung erfordert entweder ein mit langen Reaktionszeiten verbundenes Rerouten des Datenverkehrs im IP-Netz IP oder eine Verbindungsleitung EL1 zwischen den Edge-Routern ER0, ER1 - in Figur 1A gestrichelt dargestellt. Diese zusätzliche Verbindung verteuert jedoch die Anbindung des Media-Gateway MG an das IP-Netz IP zusätzlich.

Mit Blick auf die bekannte Möglichkeit der ausfallsicheren Anbindung gemäß Figur 1B ergeben sich folgende Probleme:
- Die funktionalen Nachteile der Konfiguration gemäß Figur 1A werden durch diese Konfiguration dadurch vermieden, dass eine "Über-Kreuz-Anbindung" realisiert wird, so dass "Über-Kreuz-Ausfälle" nicht zu einem Totalausfall der Anbindung führen. Allerdings wird von der insgesamt zur Verfügung stehenden Verbindungskapazität von 4-mal IGbps ein gegenüber der Konfiguration gemäß Figur 1A noch geringerer Teil genutzt. Auch bei voller Auslastung der aktiven Verbindung L0 bei entsprechendem Ausbau des Media-Gateway MG kann die Auslastung der insgesamt zur Verfügung stehenden Übertragungskapazität nie größer als 25% sein. Der Betrieb einer Anbindung gemäß Figur 1B ist folglich unter wirtschaftlichen Gesichtspunkten nicht akzeptabel, da die Kosten - wie im folgenden erläutert - pro Verbindung unabhängig von deren Auslastung sind.

Handelsübliche Router bieten "wire speed throughput", d.h. die (Rechen)Leistung der Router ist so bemessen, dass alle Schnittstellen mit der vom angeschlossenen Übertragungsmedium unterstützten Datenrate betrieben werden können und Verkehrseinschränkungen nicht auftreten. Als Folge weisen die Router nur eine beschränkte Anzahl von Schnittstellen auf, da sonst "wire speed" nicht garantiert werden kann. Daher steigen die auf die Datenrate bezogenen Anschlusskosten bedingt durch die fehlende Konzentrationsfähigkeit bei geringer Auslastung stark an, z.B. ergeben sich bei 25% Auslastung einer Verbindung die 4fachen auf die Datenrate bezogenen Kosten gegenüber 100% Auslastung der gleichen Verbindung.

Aus dem Dokument "Media Gateway CX3200", SATOH N et al, NEC Research and Development, Bd. 42, Nr. 2, Seiten 133-137, April 2001, ist auch ein Media Gateway bekannt, mit einer zweifach redundant ausgeführten TDM-Komponente, die an ein TDM-Netzwerk angeschlossen ist und mittels RAS/VOIP-Einheiten Anschluß an ein Paketnetz findet.

Es ist eine Aufgabe der vorliegenden Erfindung, ein Verfahren zur ausfallsicheren Anbindung eines Netzelementes an ein Kommunikationsnetz und ein Netzelement mit ausfallsicherer Anbindung an ein Kommunikationsnetz anzugeben, durch welche die Nachteile des Standes der Technik vermieden werden.

Diese Aufgabe wird durch ein Verfahren zur ausfallsicheren Anbindung eines Netzelementes an ein Kommunikationsnetz gemäß der Merkmale des Patentanspruchs 1 und ein Netzelement mit ausfallsicherer Anbindung an ein Kommunikationsnetz gemäß der Merkmale des Patentanspruchs 10 gelöst.

Bevorzugte Ausführungsformen sind Gegenstand der abhängigen Ansprüche.

Gemäß der vorliegenden Erfindung wird ein Verfahren zur ausfallsicheren Anbindung eines Netzelementes MG mit zumindest einer zumindest zweifach redundant ausgeführten Komponente ES0, ES1 an ein Kommunikationsnetz IP vorgesehen, demgemäss zumindest zwei Schnittstelleneinheiten IF0, IF1, IF2, IF3 über je eine Verbindung L0, L1, L2, L3 mit je einer Komponente ER0, ER1, ER2, ER3 des Kommunikationsnetzes IP und über je eine Verbindung mit den redundanten Komponenten ES0, ES1 des Netzelements MG gekoppelt sind.

Gemäß der vorliegenden Erfindung wird außerdem ein Netzelement MG mit ausfallsicherer Anbindung an ein Kommunikationsnetz IP mit zumindest einer zumindest zweifach redundant ausgeführten Komponente ES0, ES1 vorgesehen, das zur Anbindung an das Kommunikationsnetz IP zumindest zwei Schnittstelleneinheiten IF0, IF1, IF2, IF3 mit je einer Verbindung L0, L1, L2, L3 zu je einer Komponente ER0, ER1, ER2, ER3 des Kommunikationsnetzes IP und je eine Verbindung zu den redundanten Komponenten ES0, ES1 des Netzelements MG aufweist.

Bezogen auf die kleinste Konfiguration der Erfindung, bei der zwei Schnittstellenbaugruppen IF0, IF1 über je eine Verbindung L0, L1 mit je einer Komponente ER0, ER1 des Kommunikationsnetzes IP verbunden sind, ergibt sich gegenüber der Konfiguration aus Figur 1A vorteilhaft, dass "Über-Kreuz-Ausfälle" nicht zu einem Totalausfall führen. Beispielsweise können die aktive Komponente ES0 und zusätzlich eine der Schnittstellenbaugruppen IF0, IF1 oder eine der Verbindungen L0, L1 oder eine der Komponenten ER0, ER1 des Kommunikationsnetzes ausfallen, ohne dass ein Totalausfall eintritt. Dies wird gegenüber der Konfiguration aus Figur 1B durch den Einsatz von zwei anstelle von vier Verbindungen L0, L1 erreicht. Damit erreicht die erfindungsgemäße Lösung eine höhere Ausfallsicherheit als die Lösung gemäß Figur 1A und ist zugleich hinsichtlich der dauerhaft zur Verfügung zu stellenden Übertragungskapazität deutlich kostengünstiger als die Lösung gemäß Figur 1B, da auch in der kleinsten erfindungsgemäßen Konfiguration die Auslastung der Verbindungen bis zu 50% gegenüber bis zu 25% bei Figur 1B beträgt.

Gemäß der vorliegenden Erfindung ist es vorteilhaft möglich, die Anbindung über mehr als zwei Verbindungsgruppierungen vorzusehen. (Der Begriff Verbindungsgruppierung wird hier eingeführt als die Gruppierung aus Schnittstelleneinheit IF0, IF1, IF2, IF3, zugeordneter Verbindung L0, L1, L2, L3 und zugeordneter Komponente ER0, ER1, ER2, ER3 des Kommunikationsnetzes IP, da diese eine Ausfalleinheit bilden, d.h. aus Sicht der Anbindung ist der Ausfall einer Schnittstelleneinheit oder der zugeordneten Verbindung oder der zugeordneten Komponente des Kommunikationsnetzes äquivalent.) Im Zusammenhang mit Anspruch 2 ergibt sich dann der Vorteil, dass die Anbindung mit (N+1) Verbindungsgruppierungen erfolgen kann, wobei sich N als die Mindestanzahl gleichzeitig benötigter separater Verbindungen ergibt, um die gewünschte Gesamtübertragungsrate der Anbindung zu liefern. Beispielsweise sind für eine ausfallsichere Anbindung mit einer Übertragungskapazität von 220Mbps N=3 Verbindungen vom Typ Fast Ethernet (mit einer Kapazität von je 100Mbps) mindestens erforderlich, und es sind erfindungsgemäß N+1=4 Verbindungsgruppierungen vorzusehen.

Ein weiterer Vorteil der Erfindung ist darin zu sehen, dass die vorliegende Erfindung die Verteilung einer ausfallsicheren Anbindung auf niederratige Verbindungen erlaubt, beispielsweise 4 Fast Ethernet Verbindungen anstelle von 2 Gigabit Ethernet Verbindung, und somit eine kostengünstige Anbindung erlaubt, da mehrere niederratige Verbindungen im Regelfall kostengünstiger sind als eine hochratige, deren Kapazität z.B. zu weniger als 30% ausgeschöpft wird.

Im folgenden wird die Erfindung im Zusammenhang mit drei Figuren als Ausführungsbeispiel näher erläutert.
Figur 1A zeigt schematisch eine bekannte Anbindung eines Netzelementes an ein Kommunikationsnetz, wobei jede redundante Hälfte des Netzelementes mit je einer Verbindung mit dem Kommunikationsnetz verbunden ist.
Figur 1B zeigt schematisch eine bekannte Anbindung eines Netzelementes an ein Kommunikationsnetz, wobei jede redundante Hälfte des Netzelementes mit je zwei Verbindungen mit dem Kommunikationsnetz verbunden ist.
Figur 2 zeigt schematisch die erfindungsgemäße Anbindung eines Netzelementes an ein Kommunikationsnetz, wobei jede redundante Hälfte des Netzelementes mit mehreren Verbindungsgruppierungen zum Herstellen der Verbindung mit dem Kommunikationsnetz verbunden ist.

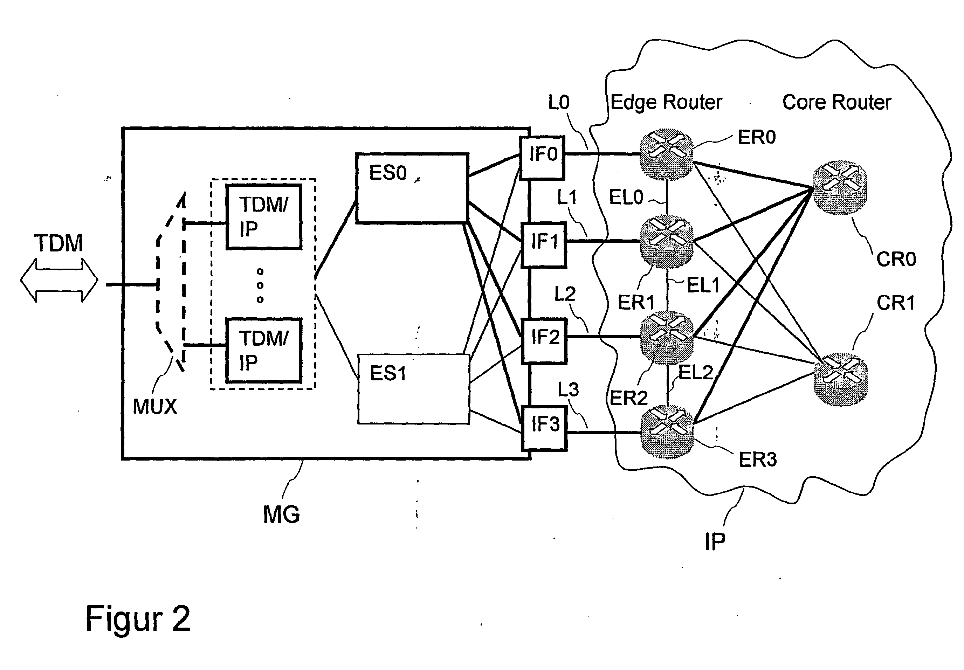

Figuren 1 und 2 zeigen jeweils einen Media-Gateway MG, der einerseits mittels TDM-Verfahren an ein herkömmliches Telefonnetz angeschlossen ist und andererseits an ein Kommunikationsnetz IP angeschlossen werden soll. Figuren 1A und 1B zeigen, wie bereits erläutert, verschiedene Methoden des Standes der Technik zur Anbindung eines Netzelementes MG an ein Kommunikationsnetzwerk IP. Das Kommunikationsnetzwerk IP ist beispielsweise ein paketorientiertes Kommunikationsnetz. Ein wichtiges Übertragungsprotokoll für paketorientierte Netze ist das Internet Protocol.

Der Media-Gateway MG weist neben weiteren, nicht dargestellten Komponenten einen Multiplexer MUX auf, mit dem TDM-Daten auf mehrere TDM/IP-Umsetzer TDM/IP verteilt werden. Diese Umsetzer sind über interne Verbindungen des Media-Gateway MG mit den Ethernet-Switches ES0, ES1 verbunden. Wie bereits erläutert, ist jeweils einer der doppelt vorhandenen Ethernet-Switches ES0, ES1 aktiv, die andere inaktiv. Im dargestellten Beispiel ist der erste Ethernet-Switch ES0 aktiv und der zweite Ethernet-Switch ES1 inaktiv bzw. im Standby-Betrieb. Weitere - nicht dargestellte - Elemente des Media-Gateway MG können zur Steigerung der Ausfallsicherheit des Media-Gateway MG ebenfalls doppelt vorhanden sein. Die Menge der aktiven Elemente wird, wie bereits erläutert, als "aktive Hälfte" bezeichnet, die Menge der inaktiven Elemente als "inaktive Hälfte". Automatisch bei Ausfall eines aktiven Elementes oder gesteuert durch administrative Eingriffe wird das zugeordnete inaktive Element aktiviert und übernimmt die Rolle des bis dahin aktiven Elements.

Figur 2 zeigt ein Ausführungsbeispiel der erfindungsgemäßen Anbindung eines Media-Gateway MG an das IP-Netz IP. Vier Schnittstelleneinheiten IF0, IF1, IF2, IF3, die Bestandteil des Media-Gateway MG sind, werden über interne Verbindungen des Media-Gateway MG jeweils sowohl mit dem aktiven Ethernet-Switch ES0 als auch mit dem inaktiven Ethernet-Switch ES1 verbunden. Jeder Schnittstelleneinheit IF0, IF1, IF2, IF3 wird genau eine Verbindung L0, L1, L2, L3 zum IP-Netz IP zugeordnet, welche die Schnittstelleneinheiten IF0, IF1, IF2, IF3 mit jeweils einem Edge-Router ER0, ER1, ER2, ER3 des IP-Netzes IP verbinden.

Durch Einsatz eines Vervielfachers bzw. einer Paketgabel an oder in jeder Schnittstelleneinheit IF0, IF1, IF2, IF3 des Media-Gateway MG wird nur noch je eine gemeinsame Verbindung L0, L1, L2, L3 benötigt, um sowohl die aktive als auch die inaktive Hälfte des Media-Gateway MG mit dem IP-Netz IP zu verbinden. Paketgabeln werden eingesetzt, um die vom Edge-Router ER0, ER1, ER2, ER3 ankommenden Ethernet-Rahmen an den jeweils aktiven Ethernet-Switch ES0 weiterzuleiten und umgekehrt vom aktiven Ethernet-Switch ES0 ankommende Ethernet-Rahmen an den Edge-Router ER0, ER1, ER2, ER3 weiterzugeben.

In einer alternativen Ausgestaltung werden vom Edge-Router ER0, ER1, ER2, ER3 ankommende Ethernet-Rahmen dupliziert und immer an beide Ethernet-Switches ES0, ES1 weitergeleitet und der inaktive Ethernet-Switch ES1 verwirft die ankommenden Ethernet-Rahmen. In der umgekehrten Übertragungsrichtung werden von den Ethernet-Switches ES0, ES1 ankommende Ethernet-Rahmen immer an den Edge-Router ER0, ER1, ER2, ER3 weitergeleitet. In diesem Fall muß gewährleistet sein, dass zu jedem Zeitpunkt nur ein Ethernet-Switch ES0, ES1 aktiv ist, d.h. Daten zu den Edge-Routern ER0, ER1, ER2, ER3 sendet.

Damit auch bei Ausfällen von Verbindungen oder (auch teilweisen) Ausfällen der Edge-Router ER0, ER1, ER2, ER3 der Telefoniedienst nicht beeinträchtigt wird, wird die Nutzlast auf mehrere Verbindungen L0, L1, L2, L3 verteilt, in Figur 2 beispielsweise auf vier Verbindungen.

Als Zahlenbeispiel wird das bereits erläuterte Beispiel verwendet (2000 Ports mit einer Datenrate von je 64 kbps und IP-Paketen, die jeweils 10 ms digitalisierter Sprache transportieren, ergibt eine Datenrate von etwa 220Mbps zwischen dem Media-Gateway MG und dem IP-Netz IP). Es werden N+1=4 Verbindungen L0, L1, L2, L3 vom Typ Fast Ethernet (mit einer Kapazität von je 100Mbps) eingesetzt. Jede dieser Verbindungen L0, L1, L2, L3 ist in diesem Beispiel im störungsfreien Betrieb zu 55% ausgelastet. Fällt ein Edge-Router ER0, ER1, ER2, ER oder eine Verbindung L0, L1, L2, L3 aus, wird die betroffene Nutzlast über die freie Kapazität der verbleibenden Verbindungen L0, L1, L2, L3 verteilt, die dann zu 73% ausgelastet sind.

In einer Weiterbildung der Erfindung können Verbindungen EL0, EL1, EL2 zwischen den Edge-Routern ER0, ER1, ER2, ER3 vorgesehen werden, um bei Ausfall einer Schnittstelleneinheit IF0, IF1, IF2, IF3 oder einer Verbindung L0, L1, L2, L3 den dieser ausgefallenen Schnittstelleneinheit bzw. Verbindung zugeordneten Datenverkehr an die Edge-Router mit funktionierender Schnittstelleneinheit bzw. Verbindung umzuleiten. Diese (bezogen auf die Edge-Router lokale) Umleitung des Datenverkehrs findet regelmäßig schneller statt als eine Umleitung des Verkehrs durch die nächste Router-Ebene, die beispielsweise aus Core-Routern CR0, CR1 gebildet wird.

Obwohl die Erfindung im Zusammenhang mit der Anbindung eines Media-Gateway MG an ein IP-Netz IP beschrieben wurde, ist die Erfindung ist nicht auf das Ausführungsbeispiel beschränkt. Die Anbindung eines Media-Gateway MG an andere paketorientierte Netze IP ist mit der vorliegenden Erfindung möglich. Beispielsweise können die erläuterten Paketgabeln anstelle auf Basis von Ethernet-Rahmen auf Basis von Rahmen anderer Layer-2-Protokolle oder auf Basis von IP-Paketen oder auf Basis von Paketen anderer Layer-2-Protokolle arbeiten.

Andere Netzelemente MG als ein als Ausführungsbeispiel erläuterter Media-Gateway MG, die redundante Komponenten ES0, ES1 zur Vermittlung von Daten in ein Kommunikationsnetz IP vorsehen, können mit Hilfe der Erfindung ebenfalls kostengünstig ausfallsicher an ein Kommunikationsnetz angebunden werden.

Falls drei- oder mehrfache Redundanzen innerhalb eines Netzelementes MG vorgesehen sind, treten an die Stelle der 2-fach Vervielfacher bzw. 2-fach Paketgabeln entsprechende Drei- oder Mehrfachvervielfacher oder Drei- oder Mehrfachsplitter.

## Patentansprüche

1. Verfahren zur ausfallsicheren Anbindung eines Netzelementes (MG) mit zumindest einer zumindest zweifach redundant ausgeführten, paketvermittelnden Komponente (ES0, ES1) an ein paketvermittelndes Kommunikationsnetz (IP),
- demgemäss zumindest zwei Paketgabeln (IF0, IF1, IF2, IF3) über je eine Verbindung (L0, L1, L2, L3) mit je einer Komponente (ER0, ER1, ER2, ER3) des Kommunikationsnetzes (IP) und über je eine Verbindung mit den redundanten Komponenten (ES0, ES1) des Netzelements (MG) gekoppelt sind,
- wobei eine erste (ES0) der redundant ausgeführten Komponenten (ES0, ES1) aktiv ist und der Vermittlung von Nutzdaten dient und alle weiteren (ES1) der redundant ausgeführten Komponenten (ES0, ES1) im Standby-Betrieb arbeiten und keine Vermittlung von Nutzdaten ausführen,
- wobei durch die Paketgabeln (IF0, IF1, IF2, IF3) in Übertragungsrichtung vom paketvermittelnden Kommunikationsnetz (IP) zum Netzelement (MG) die Paketdaten an die jeweils aktive Komponente (ES0) weitergeleitet wird, und
- wobei durch die Paketgabeln (IF0, IF1, IF2, IF3) in Übertragungsrichtung vom Netzelement (MG) zum Kommunikationsnetz (IP) die Paketdaten von der jeweils aktiven Komponente (ES0) entgegengenommen und zum Kommunikationsnetz (IP) weitergeleitet wird.

2. Verfahren nach Anspruch 1,
**dadurch gekennzeichnet,**
**dass** durch die Paketgabeln (IF0, IF1, IF2, IF3) in Übertragungsrichtung vom Kommunikationsnetz (IP) zum Netzelement (MG) die Paketdaten vervielfacht und zusätzlich an alle im Standby-Betrieb arbeitenden Komponenten (ES1) weitergeleitet wird, wobei die im Standby-Betrieb arbeitenden Komponenten (ES1) den Verkehr verwerfen.

3. Verfahren nach einem der Ansprüche 1 oder 2,
**dadurch gekennzeichnet,**
**dass** durch die Paketgabeln (IF0, IF1, IF2, IF3) in Übertragungsrichtung vom Netzelement (MG) zum Kommunikationsnetz (IP) Paketdaten auch von den im Standby-Betrieb arbeitenden Komponenten (ES0, ES1) entgegengenommen und zum Kommunikationsnetz (IP) weitergeleitet wird.

4. Verfahren nach einem der Ansprüche 1 bis 3,
**dadurch gekennzeichnet,**
- **dass** bei Ausfall einer Paketgabel (IF0, 1F1, IF2, IF3) oder einer Verbindung (L0, L1, L2, L3) oder einer Komponente (ER0, ER1, ER2, ER3) des Kommunikationsnetzes (IP) der über die von diesem Ausfall betroffene Verbindung (L0, L1, L2, L3) transportierte Verkehr auf die nicht betroffenen Verbindungen (L0, L1, L2, L3) umgeleitet wird, und
- **dass** die Verbindungen (L0, L1, L2, L3) auf das Netzelement (MG) abgestimmt werden, indem die Kapazität der Verbindungen (L0, L1, L2, L3) so festgelegt wird, dass bei Ausfall einer der Verbindungen (L0, L1, L2, L3) die Kapazität der verbleibenden Verbindungen (L0, L1, L2, L3) ausreicht, den insgesamt auf der ausfallsicheren Anbindung zu transportierenden Verkehr zu transportieren.

5. Verfahren nach einem der Ansprüche 1 bis 4,
**dadurch gekennzeichnet,**
- **dass** bei Ausfall der aktiven ersten Komponente (ES0) die Vermittlung von Nutzdaten auf eine der weiteren Komponenten (ES1) umgeschaltet wird, wodurch diese weitere Komponente (ES1) zur aktiven Komponente wird.

6. Verfahren nach Anspruch 5,
**dadurch gekennzeichnet,**
**dass** über die Verbindungen (L0, L1, L2, L3) IP-Pakete oder Ethernet-Rahmen oder Ethernet-Rahmen, die IP-Pakete enthalten, transportiert werden.

7. Netzelement (MG) mit ausfallsicherer Anbindung an ein paketvermittelndes Kommunikationsnetz (IP) mit zumindest einer zumindest zweifach redundant ausgeführten, paketvermittelnden Komponente (ES0, ES1), das folgendes aufweist:
- eine erste, aktive (ES0) der redundant ausgeführten Komponenten (ES0, ES1), welche der Vermittlung von Nutzdaten dient sowie weitere, im Standby-Betrieb arbeitende (ES1) der redundant ausgeführten Komponenten (ES0, ES1), welche keine Vermittlung von Nutzdaten ausführen,
- zumindest zwei Paketgabeln (IF0, IF1, IF2, IF3) mit je einer Verbindung (L0, L1, L2, L3) zu je einer Komponente (ER0, ER1, ER2, ER3) des Kommunikationsnetzes (IP) und mit je einer Verbindung zu den redundanten Komponenten (ES0, ES1) des Netzelements (MG), wobei die Paketgabeln (IF0, IF1, IF2, IF3) Mittel aufweisen zum Weiterleiten von Paketdaten in Übertragungsrichtung vom paketvermittelnden Kommunikationsnetz (IP) zum Netzelement (MG) an die jeweils aktive Komponente (ES0) und wobei die Paketgabeln (IF0, IF1, IF2, IF3) ferner Mittel aufweisen zum Entgegennehmen von Paketdaten in Übertragungsrichtung vom Netzelement (MG) zum Kommunikationsnetz (IP) von der jeweils aktiven Komponente (ES0) und Weiterleiten dieser Paketdaten zum Kommunikationsnetz (IP) wird.

8. Netzelement (MG) nach Anspruch 7,
das zusätzlich oder integriert in die Paketgabeln (IF0, IF1, IF2, IF3) Vervielfacher für Verkehr in Übertragungsrichtung vom Kommunikationsnetz (IP) zum Netzelement (IP) aufweist.

9. Netzelement (MG) nach Anspruch 8,
wobei die Paketgabeln (IF0, IF1, IF2, IF3) Mittel zum Anschluß an ein paketorientiertes Kommunikationsnetz (IP) aufweisen und die Vervielfacher Mittel zum Vervielfachen von IP-Paketen oder Ethernet-Rahmen oder Ethernet-Rahmen, die IP-Pakete enthalten, aufweisen.

## Claims

1. Method for the fail-safe interfacing of a network element (MG) comprising at least one packet-switching component (ES0, ES1) which is configured in an at least doubly redundant manner with a packet-switching communication network (IP),
- according to which at least two packet splitters (IF0, IF1, IF2, IF3) are coupled to a respective component (ER0, ER1, ER2, ER3) of the communication network IP via one respective connection (L0, L1, L2, L3) and to the redundant components (ES0, ES1) of the network element (MG) via one respective connection
- whereby a first (ES0) of the redundantly configured components (ES0, ES1) is active and serves to switch payload data, and
all other (ES1) redundantly configured components (ES0, ES1) operate in standby mode and do not switch payload data,
- whereby the packet data is routed to the respective active component (ES0) by the packet splitters (IF0, IF1, IF2, IF3) in the transmission direction from the packet-switching communication network (IP) to the network element (MG)
- whereby the packet data from the respectively active component (ES0) is received by the packet splitters (IF0, IF1, IF2, IF3) in the transmission direction from the network element (MG) to the communication network (IP) and routed to the communication network (IP).

2. Method according to claim 1,
**characterised in that**
the packet data is multiplied by the packet splitters (IF0, IF1, IF2, IF3) in the transmission direction from the communication network (IP) to the network element (MG) and is additionally forwarded to all components operating in standby mode (ES1), whereby the components operating in standby mode (ES1) reject the traffic.

3. Method according to one of claims 1 or 2
**characterised in that**
packet data also from the components operating in standby mode (ES0, ES1) is received by the packet splitters (IF0, IF1, IF2, IF3) in the transmission direction from the network element (MG) to the communication network (IP) and is forwarded to the communication network (IP).

4. Method according to one of Claims 1 to 3
**characterised in that**
if a packet splitter (IF0 IF1, IF2, IF3) or a connection (L0, L1, L2, L3) or a component (ER0, ER1, ER2, ER3) of the communication network (IP) fails, the traffic transported via the connection (L0, L1, L2, L3) affected by said failure is rerouted to the unaffected connections (L0, L1, L2, L3),
and
the connections (L0, L1, L2, L3) are tailored to the network element (MG), **in that** the capacity of the connections (L0, L1, L2, L3) is established such that if one of the connections (L0, L1, L2, L3) fails, the capacity of the remaining connections (L0, L1, L2, L3) is sufficient to transport all the traffic to be transported on the fail-safe interfacing.

5. Method according to one of claims 1 to 4
**characterised in that**
- if the active first component (ES0) fails, the switching of payload data is moved to one of the other components (ES1), whereby this other component (ES1) becomes the active component

6. Method according to claim 5
**characterised in that**
IP packets or Ethernet frames or Ethernet frames which contain IP packets are transported via the connections (L0, L1, L2, L3).

7. Network element (MG) having fail-safe interfacing with a packet-switching communication network (IP), having at least one packet-switching component (ES0, ES1) configured in an at least doubly redundant manner, comprising the following:
- a first active component (ES0) of the redundantly configured components (ES0, ES1), which serves to switch payload data, as well as other redundantly configured components (ES0, ES1) operating in standby mode (ES1), which do not switch payload data,
- at least two packet splitters (IF0, IF1, IF2, IF3) are coupled to a respective component (ER0, ER1, ER2, ER3) of the communication network IP via one respective connection (L0, L1, L2, L3) and to the redundant components (ES0, ES1) of the network element (MG) via one respective connection, whereby the packet splitters (IF0, IF1, IF2, IF3) have means for forwarding packet data to the respective active component (ES0) in the transmission direction from the packet-switching communication network (IP) to the network element (MG) and whereby the packet splitters (IF0, IF1, IF2, IF3) comprise further means for receiving packet data from the respective active component (ES0) in the transmission direction from the network element (MG) to the communication network (IP) and forwarding this packet data to the communication network (IP).

8. Network element (MG) according to claim 7
comprising multipliers for traffic in the transmission direction from the communication network (IP) to the network element (IP) in addition to or integrated in the packet splitters (IF0, IF1, IF2, IF3).

9. Network element (MG) according to claim 8
whereby the packet splitters (IF0, IF1, IF2, IF3) comprise means for connection to a packet-oriented communication network (IP) and the multipliers comprise means for multiplying IP-packets or Ethernet frames or Ethernet frames containing IP packets.

## Revendications

1. Procédé pour le rattachement à sûreté intégrée d'un élément de réseau (MG) avec au moins un composant (ES0, ES1) à commutation par paquets, réalisé au moins avec une double redondance à un réseau de communication (IP) à commutation par paquets,
- selon lequel au moins deux fourches de paquet (IF0, IF1, IF2, IF3) sont couplées par respectivement une liaison (L0, L1, L2, L3) avec respectivement un composant (ER0, ER1, ER2, ER3) du réseau de communication (IP) et par respectivement une liaison avec les composants (ES0, ES1) redondants de l'élément de réseau (MG),
- un premier (ES0) des composants (ES0, ES1) réalisés de façon redondante étant actif et servant à la transmission de données utiles et tous les autres (ES1) des composants (ES0, ES1) réalisés de façon redondante travaillant en mode attente et n'exécutant pas de transmission de données utiles,
- les paquets de données étant retransmis au composant (ES0) respectivement actif par les fourches de paquet (IF0, IF1, IF2, IF3) dans le sens de transmission du réseau de communication (IP) à commutation par paquets vers l'élément de réseau (MG), et
- les paquets de données étant reçus du composant (ES0) respectivement actif et étant retransmis au réseau de communication (IP) par les fourches de paquet (IF0, IF1, IF2, IF3) dans le sens de transmission de l'élément de réseau (MG) vers le réseau de communication (IP).

2. Procédé selon la revendication 1,
**caractérisé en ce que**
les paquets de données sont multipliés par les fourches de paquet (IF0, IF1, IF2, IF3) dans le sens de transmission du réseau de communication (IP) vers l'élément de réseau (MG) et sont retransmis en supplément à tous les composants (ES1) travaillant en mode attente, les composants (ES1) travaillant en mode attente rejetant le trafic.

3. Méthode selon l'une quelconque des revendications 1 ou 2,
**caractérisée en ce que**
des paquets de données sont réceptionnés également des composants (ES0, ES1) travaillant en mode attente et étant retransmis au réseau de communication (IP) par les paquets de fourche (IF0, IF1, IF2, IF3) dans le sens de transmission de l'élément de réseau (MG) vers le réseau de communication (IP).

4. Procédé selon l'une quelconque des revendications 1 à 3,
**caractérisé en ce que**
- en cas de défaillance d'une fourche de paquet (IF0, IF1, IF2, IF3) ou d'une liaison (L0, L1, L2, L3) ou d'un composant (ER0, ER1, ER2, ER3) du réseau de communication (IP), le trafic transporté par la liaison (L0, L1, L2, L3) concernée par cette défaillance est dévié vers les liaisons (L0, L1, L2, L3) non concernées, et
- **en ce que** les liaisons (L0, L1, L2, L3) sont adaptées à l'élément de réseau (MG), du fait que la capacité des liaisons (L0, L1, L2, L3) est définie de telle sorte que, en cas de défaillance de l'une des liaisons (L0, L1, L2, L3), la capacité des liaisons (L0, L1, L2, L3) restantes est suffisante pour transporter le trafic à transporter globalement sur le rattachement à sûreté intégrée.

5. Procédé selon l'une quelconque des revendications 1 à 4,
**caractérisé en ce que**
- en cas de défaillance du premier composant (ES0) actif, la transmission de données utiles est commutée sur l'un des autres composants (ES1), de sorte que cet autre composant (ES1) devient le composant actif.

6. Procédé selon la revendication 5,
**caractérisé en ce que**
des paquets IP ou des trames Ethernet ou des trames Ethernet qui contiennent des paquets IP, sont transportés par les liaisons (L0, L1, L2, L3).

7. Elément de réseau (MG) avec un rattachement à sûreté intégrée à un réseau de communication (IP) à commutation par paquets avec au moins un composant (ES0, ES1) à commutation par paquets et réalisé au moins avec une double redondance, qui présente ce qui suit :
- un premier composant actif (ES0) des composants (ES0, ES1), réalisés de façon redondante, qui sert à la transmission de données utiles et d'autres composants travaillant en mode attente (ES1) des composants (ES0, ES1) réalisés de façon redondante, qui n'exécutent aucune transmission de données utiles,
- au moins deux fourches de paquet (IF0, IF1, IF2, IF3) comprenant chacune une liaison (L0, L1, L2, L3) avec respectivement un composant (ER0, ER1, ER2, ER3) du réseau de communication (IP) et comprenant chacun une liaison avec les composants redondants (ES0, ES1) de l'élément de réseau (MG), les fourches de paquet (IF0, IF1, IF2, IF3) présentant des moyens pour la retransmission de données de paquet dans le sens de transmission du réseau de communication (IP) à commutation par paquets vers l'élément de réseau (MG) au composant (ES0) respectivement actif et les fourches de paquet (IF0, IF1, IF2, IF3) présentant également des moyens pour la réception de données de paquet dans le sens de transmission de l'élément de réseau (MG) vers le réseau de communication (IP) par le composant (ES0) respectivement actif et pour la retransmission de ces données de paquet au réseau de communication (IP).

8. Elément de réseau (MG) selon la revendication 7,
qui présente en supplément ou de façon intégrée dans les fourches de paquet (IF0, IF1, IF2, IF3) des multiplicateurs pour le trafic dans le sens de transmission du réseau de communication (IP) vers l'élément de réseau (IP) .

9. Elément de réseau (MG) selon la revendication 8,
les fourches de paquet (IF0, IF1, IF2, IF3) présentant des moyens pour la connexion à un réseau de communication (IP) orienté paquet et les multiplicateurs présentant des moyens pour la multiplication de paquets IP ou de trames Ethernet ou de trames Ethernet qui contiennent des paquets IP.
